# EUROPÄISCHE PATENTSCHRIFT

(11) **EP 2 360 041 B1**
(45) Veröffentlichungstag und Bekanntmachung des Hinweises auf die Patenterteilung: **11.09.2013**
(21) Anmeldenummer: 11153685.0
(22) Anmeldetag: 08.02.2011
(51) Int. Cl.: B60H 1/02

(54) **Kreislaufanordnung**
Circuit assembly
Agencement de circuit

(30) Priorität: 11.02.2010 DE 102010001803; 17.08.2010 DE 102010034657
(43) Veröffentlichungstag der Anmeldung: 24.08.2011
(73) Patentinhaber: Behr GmbH & Co. KG, 70469 Stuttgart (DE)
(72) Erfinder: Kroner, Peter, 66482, Zweibrücken (DE); Müller, Rolf, 71711, Steinheim (DE); Strauß, Thomas, 73274, Notzingen (DE); Weinbrenner, Marcus, 70839, Gerlingen (DE)
(74) Vertreter: Grauel, Andreas

(56) Entgegenhaltungen:
- GB-A- 1 154 777
- GB-A- 1 600 033
- US-A- 1 719 321
- US-A- 2 479 029
- US-A- 4 565 175

## Beschreibung

Die Erfindung betrifft eine Kreislaufanordnung für ein eine Brennkraftmaschine aufweisendes Kraftfahrzeug gemäß dem Oberbegriff des Anspruchs 1. Eine gattungsgemäße Kreislaufanordnung ist in US 1,719,321 offenbart.

Durch Integration des Abgaskrümmers einer Brennkraftmaschine in den Zylinderkopf kann der Kraftstoffverbrauch nach dem Kaltstart, in der Warmlaufphase und im betriebswarmen Zustand signifikant verringert werden, da die Abwärme des Abgaskrümmers in den Kühlkreislauf der Brennkraftmaschine eingebracht wird. Die Abwärme, die über einen derartigen kühlmittelgekühlten und/oder integrierten Abgaskrümmer gewonnen wird, steht dann allerdings nicht nur bzw. nicht vollständig für die Beheizung des Innenraums des Kraftfahrzeugs zur Verfügung.

Um dennoch kontinuierlich eine ausreichende Innenraumtemperatur im Kraftfahrzeug bereitzustellen, ist es im Stand der Technik bekannt, Hochleistungs-Heizkörper beispielsweise mit mindestens zwei Umlenkungen in der Tiefe einzusetzen.

Beispielsweise offenbart DE 44 31 107 C1 eine Wärmetauscheranordnung zur Beheizung der Kabine von Kraftfahrzeugen mit der Abwärme des Antriebsmotors, bei der das Kühlmittel zur Erwärmung der Fahrgastzelle durch eine Vielzahl von Wärmeübertragungsrohren strömt, welche die Wärme über mit den Wärmeübertragungsrohren in Kontakt stehenden Kühlrippen an die in die Kabine beförderte Luft abgeben, eine Reihenschaltung von mindestens drei Querstromwärmetauschern mit jeweils mehreren parallel von dem Kühlmittel durchströmten Wärmeübertragungsrohren vorgesehen ist. Durch diese Konfiguration soll eine deutliche Heizleistungssteigerung erzielt werden, so dass sogar zusätzliche Zuheizer für die Kabinenaufheizung o. ä. entfallen können.

Diese im Stand der Technik bekannten Hochleistungs-Heizkörper arbeiten allerdings mit einem reduzierten Volumenstrom, beispielsweise in dem Bereich von 100 bis 400 1/h. Wenn der Kühlmittelvolumenstrom nach Durchströmen des Abgaskrümmers entnommen wird, um zur zeitweisen ausschließlichen Innenraumbeheizung durch einen derartigen Hochleistungs-Heizkörper der Kraftfahrzeugklimaanlage dem Heizkörpervorlauf zugeführt zu werden, kann es zu einer aufgrund des Druckabfalls in dem Hochleistungs-Heizkörper und der daraus resultierenden Reduzierung des Volumenstroms zu einer Temperaturerhöhung des Kühlmittels, beispielsweise bis zum Siedepunkt, kommen. Die Temperaturerhöhung des Kühlmittels kann jedoch den Abgaskrümmer beschädigen.

Es ist die Aufgabe der vorliegenden Erfindung, eine Kreislaufanordnung für ein eine Brennkraftmaschine aufweisendes Kraftfahrzeug vorzusehen, mittels welcher der gesamte Kühlmittelvolumenstrom eines kühlmittelgekühlten und/oder integrierten Abgaskrümmers zumindest zeitweise ausschließlich zur Innenraumbeheizung durch einen Hochleistungs-Heizkörper einer Kraftfahrzeugklimaanlage nutzbar ist, wodurch ein optimaler Bauteilschutz des Verbrennungsmotors, insbesondere des Zylinderkopfs und des Abgaskrümmers, gewährleistet werden kann.

Die Aufgabe der vorliegenden Erfindung wird durch eine Kreislaufanordnung mit den Merkmalen gemäß Anspruch 1 gelöst, Vorteilhafte Weiterbildungen der vorliegenden Erfindung sind in den Unteransprüchen definiert.

Erfindungsgemäß wird eine Kreislaufanordnung für ein eine Brennkraftmaschine aufweisendes Kraftfahrzeug bereitgestellt, wobei ein Kühlmittelvolumenstrom in einem zumindest einen Kühlmittelkühler, einen Motorblock und einen Abgaskrümmer durchlaufenden Kühlkreislaufabschnitt und/oder in einem einen Wärmetauscher, den Motorblock und den Abgaskrümmer durchlaufenden Heizkreislaufabschnitt zirkulierbar ist, wobei in der Kreislaufanordnung eine Schutzeinrichtung zur Entdrosselung des den Abgaskrümmer durchlaufenden Kühlmittelvolumenstroms vorgesehen ist.

Um Schäden insbesondere an dem Abgaskrümmer, der von dem Kühlmittel durchströmt wird, zu vermeiden, bewirkt die Schutzeinrichtung durch die Entdrosselung eine Erhöhung des Kühlmittelvolumenstroms und eine damit verbundene Temperaturreduzierung. Durch die erfindungsgemäße Konfiguration wird somit eine ausschließliche Nutzung der Abwärme eines kühlmittelgekühlten und/oder integrierten Abgaskrümmers zur zeitweisen ausschließlichen Innenraumbeheizung ermöglicht, ohne dass Schäden an den Komponenten, die durch den Kühlmittelvolumenstrom durchströmt werden, insbesondere an dem Abgaskrümmer, auftreten können. Hierbei kann darüber hinaus eine Erhöhung der Heizleistung für die Innenraumbeheizung erzielt werden, da ein Hochleistungs-Heizkörper mit reduziertem Volumenstrom eingesetzt werden kann. Außerdem kann aufgrund der zeitweisen ausschließlichen Nutzung der Abwärme ein elektrischer Zuheizer entfallen, was die Kosten und den Bauraumbedarf reduziert, Vorteilhaft ist bei der erfindungsgemäßen Konfiguration darüber hinaus, dass Kraftstoff insbesondere im Heizbetrieb, bei der Aufheizung und beim Kaltstart (Verbrauchszyklus) eingespart werden kann.

Gemäß einer weiteren bevorzugten Ausführungsform ist die Schutzeinrichtung zusätzlich ein Ventil oder ein Thermostat, das/der in einem ersten, motorinternen Bypass angeordnet ist. Vorzugsweise wird ein Schaltventil verwendet, bei welchem die Sensierung einer Öffnungstemperatur bzw. einer Stellgröße des Schaltventils über einen Kühlmitteltemperatursensor und/oder einen Abgastemperatursensor und/oder über die Motorlast und/oder über die Einspritzmasse des Kraftstoffs erfolgt. Hierzu können bereits vorhandene Sensoren im Kühlmittel, beispielsweise im Zylinderkopf, oder Abgastemperatursensoren am Lader verwendet werden, wobei je nach Konfiguration der Kreislaufanordnung unter Umständen ein zusätzlicher Kühlmitteltemperatursensor erforderlich sein kann.

Gemäß der Erfindung ist die Schutzeinrichtung ein zweiter Bypass, der in dem Heizkreislaufabschnitt als zu dem Wärmetauscher paralleler Zweig angeordnet ist.

Gemäß noch einer bevorzugten Ausführungsform ist der Wärmetauscher eine Heizeinrichtung zum Beheizen des Innenraums des Kraftfahrzeugs, insbesondere ein Hochleistungs-Heizkörper mit reduziertem Volumenstrom von 100 bis 400 l/h ist. Durch Verwenden des Hochleistungs-Heizkörpers entfällt die Notwendigkeit des Einsatzes von elektrischen Zuheizern, um eine ausreichend hohe Temperatur im Innenraum eines Kraftfahrzeugs bereitzustellen.

Gemäß der Erfindung ist in dem zweiten Bypass ein 3-Wege-Ventil, ein Absperrventil oder ein Schlauchthermostat vorgesehen. Vorzugsweise erfolgt die Sensierung der Öffnungstemperatur des Schlauchthermostates über eine Wachspille und wird durch einen definierten kleinen Leckage-Volumenstrom des Kühlmittels realisiert. Vorzugsweise ist der Abgaskrümmer ein kühlmittelgekühlter Abgaskrümmer und/oder ein integrierter Abgaskrümmer, insbesondere ein in einen Zylinderkopf des Motorblocks integrierter Abgaskrümmer. Durch Einsatz eines integrierten Abgaskrümmers kann eine signifikante Kraftstoffeinsparung im Heizbetrieb, beim Aufheizen und beim Kaltstart der Brennkraftmaschine erzielt werden.

Darüber hinaus mündet gemäß einer weiteren bevorzugten Ausführungsform der zweite Bypass in den Kühlkreislaufabschnitt.

Es ist besonders bevorzugt, wenn der zweite Bypass beim Auftreten einer vorbestimmten Bedingung geöffnet wird.

Gemäß einer weiteren bevorzugten Ausführungsform wird das Ventil oder der Thermostat, das/der in dem ersten, motorinternen Bypass angeordnet ist, beim Auftreten der vorbestimmten Bedingung geöffnet.

Vorzugsweise erfolgt ein Öffnen des Ventils bzw. des Thermostats gemäß der vorbestimmten Bedingung bei Erreichen einer kritischen Kühlmitteltemperatur unterhalb einer maximalen Kühlmitteltemperatur T_{KM max} oder an der maximalen Kühlmitteltemperatur T_{KM} bezüglich eines Siedens des Kühlmittels im Abgaskrümmer, wobei die maximale Kühlmitteltemperatur T_{KM max.} vorzugsweise in einem Bereich von 80 °C bis 100°C, noch bevorzugter in einem Bereich von 90 °C bis 110°C, und besonders bevorzugt in einem Bereich von 95 °C bis 105 °C liegt. Alternativ oder parallel kann ein Öffnen des Ventils bzw. des Thermostats gemäß einer weiteren bevorzugten Ausführungsform bei Erreichen einer kritischen Abgastemperatur unterhalb der maximalen Abgastemperatur T_{Abgas} oder an der maximalen Abgastemperatur T_{Abgas} erfolgen, wobei eine minimale Temperatur zum Öffnen des Ventils bei 120 °C, vorzugsweise in einem Bereich von 150 °C bis 500 °C und besonders bevorzugt in einem Bereich von 180 °C bis 400 °C liegt. Gemäß noch einer weiteren bevorzugten Ausführungsform kann das Ventil bzw. der Thermostat alternativ oder parallel bei Erreichen einer vorbestimmten Motorlast L_{Motor} geöffnet werden, wobei eine kritische Motorlast L_{Motor Öff}. zum Öffnen des Ventils oder eine maximale Motorlast L_{Motor max.} vorzugsweise in einem Bereich zwischen 35 % und 70 % und besonders bevorzugt bei 35 % liegt. Dabei wird die Motorlast L_{Motor} in % in Abhängigkeit von dem von der Motorsteuerung errechneten Drehmoment Nm bestimmt. Gemäß noch einer weiteren bevorzugten Ausführungsform wird das Ventil bzw. der Thermostat alternativ oder parallel bei Erreichen von Temperaturen im Verbrennungsmotor bzw. Abgaskrümmer erfolgen, welche durch eine kritische Einspritzmasse bzw. maximale Einspritzmasse m_{Fuel} verursacht werden. Dabei wird die Einspritzmass m_{Fuel} in % in Abhängigkeit von der von der Motorsteuerung errechneten Einspritzmenge pro Hub [mg/Hub] bestimmt.

Im Hinblick auf die vorbestimmte Bedingung für den Thermostat, der insbesondere als Schlauchthermostat ausgeführt ist, ist es bevorzugt, wenn der Beginn der Öffnung des Thermostats unter der maximalen Kühlmitteltemperatur bezüglich des Siedens des Kühlmittels im Abgaskrümmer liegt, wobei die maximale Kühlmitteltemperatur vorzugsweise in einem Bereich von 80 °C bis 100 °C, noch bevorzugter in einem Bereich von 90 °C bis 110 °C, und besonders bevorzugt in einem Bereich von 95 °C bis 105 °C liegt. Die Verwendung eines Schlauchthermostats stellt dabei eine besonders kostengünstige Variante im Hinblick auf die notwendige Hardware dar, wobei bei dieser Implementierung darüber hinaus vorteilhaft ist, dass keine weitere Verarbeitung von Zusatzsignalen notwendig ist.

Durch die Steuerung bzw. Reglung des Wärmestroms gemäß den obigen Ausführungsformen unter Verwendung des Ventils oder des Thermostats kann ein optimaler Bauteilschutz der Komponenten des Verbrennungsmotors, insbesondere im Bereich des Zylinderkopfes und des Abgaskrümmers, sichergestellt werden. Darüber hinaus wird hierdurch eine nutzungsoptimierte Lösung bereitgestellt, da der Betrieb aufgrund der Berücksichtigung aller kritischer Betriebsparameter erweiterbar ist.

Gemäß noch einer weiteren bevorzugten Ausführungsform ist die vorbestimmte Bedingung eines oder mehrere von einer vorbestimmten Kühlmitteltemperatur T_{KM,} insbesondere einer Kühlmitteltemperatur T_{KM} in einem Bereich zwischen 80 °C und 110 °C, einer vorbestimmten Abgastemperatur T_{Abgas}, insbesondere einer Abgastemperatur T_{Abgas}, welche oberhalb 120 °C liegt, einer vorbestimmten Motorlast L_{Motor}, insbesondere einer Motorlast L_{Motor,} welche in einem Bereich von 35 % bis 70 % liegt, und/oder einer vorbestimmten Einspritzmasse m_{Fuel}, insbesondere einer Einspritzmasse m_{Fuel}, welche in einem Bereich von 35 % bis 70 % liegt.

Im Folgenden wird die Erfindung anhand eines Ausführungsbeispiels unter Bezugnahme auf die Zeichnung detailliert erläutert. In der Zeichnung zeigen:
- Fig. 1: eine Kreislaufanordnung gemäß einer Ausführungsform;
- Fig. 2: eine Kreislaufanordnung gemäß einer weitere Ausführungsform;
- Fig. 3: eine Kreislaufanordnung gemäß noch einer weiteren Ausführungsform;
- Fig. 4: eine Kreislaufanordnung gemäß noch einer weiteren Ausführungsform; und
- Fig. 5: noch eine weitere Kreislaufanordnung gemäß noch einer weiteren Ausführungsform .
- Fig. 6: ein Schema eines Betriebsverfahrens gemäß einer Ausführungsform;
- Fig. 7-11: Darstellungen von Betriebsverfahren;

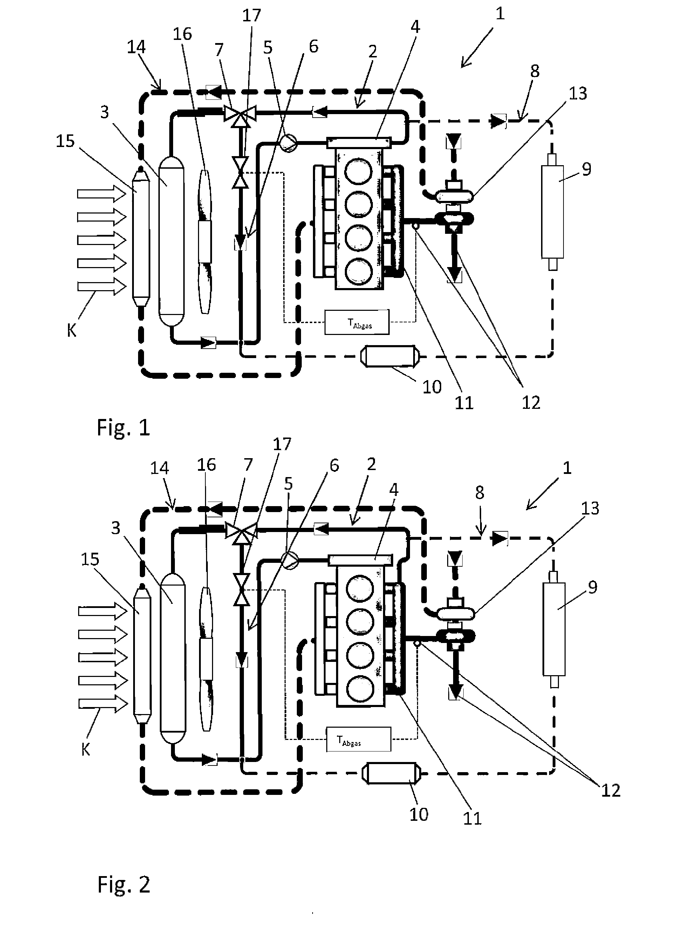

Fig. 1 zeigt eine Kreislaufanordnung 1 mit direkter Ladeluftkühlung gemäß einer Ausführungsform. Die Kreislaufanordnung 1 weist einen Kühlkreislaufabschnitt 2 auf, wobei ein Kühlmittel durch einen Kühlmittelkühler 3 und einen Motorblock 4 einer Brennkraftmaschine zirkulierbar ist. In dem Kühlkreislaufabschnitt 2 ist darüber hinaus eine Pumpe 5 angeordnet. Der Kühlkreislaufabschnitt 2 umfasst einen ersten, motorinternen Bypass 6, über welchen das in dem Kühlkreislaufabschnitt 2 zirkulierende Kühlmittel nach Austreten aus dem Motorblock 4 statt zur Abkühlung in dem Kühlmittelkühler 3 geleitet zu werden, direkt wieder dem Motorblock 4 zugeführt werden kann. Wie oben bereits erläutert kann über den ersten, motorinternen Bypass 6 im Motorblock 4 erwärmtes Kühlmittel diesem direkt wieder zugeführt werden, wodurch unter anderem eine Kraftstoffeinsparung beispielsweise bei einem Kaltstart der Brennkraftmaschine erzielt werden kann. Zum Steuern der Strömung in dem Kühlkreislaufabschnitt 2 entweder über den ersten, motorinternen Bypass 6 und/oder durch den Kühlmittelkühler 3 ist ein erstes Drei-Wege-Ventil 7 vorgesehen. Weiterhin weist die Kreislaufanordnung 1 einen Heizkreislaufabschnitt 8 auf, wobei der am Motorblock 4 austretende erwärmten Kühlmittelstrom einen in dem Heizkreislauf 8 angeordneten Wärmetauscher 9, der hier als Hochleistungs-Heizkörper ausgebildet ist, und einen Motorölkühler 10 durchströmt, bevor er wieder dem Motorblock 4 durch Einleiten in den ersten, motorinternen Bypass 6 des Kühlkreislaufabschnitts 2 zugeführt wird.

An dem Motorblock ist ein kühlmittelgekühlter Abgaskrümmer 11 angeordnet. Abgas 12, das aus dem Abgaskrümmer 11 austritt, wird einem Abgasturbolader 13 zugeführt, der in einem Ladeluftkreislaufabschnitt 14 angeordnet ist. Ebenfalls in dem Ladeluftkreislaufabschnitt 14 angeordnet ist ein Ladeluftkühler 15. Der Ladeluftkühler 15 und der hinter dem Ladeluftkühler 15 angeordnete Kühlmittelkühler 3 werden von Kühlluft K durchströmt, so dass das Kühlmittel beim Durchlaufen dieser Komponenten in der Kreislaufanordnung 1 abgekühlt wird. Hinter dem Kühlmittelkühler 3 ist darüber hinaus ein Lüfter 16 angeordnet.

Wenn die am Motorblock 4 bzw. Abgaskrümmer 11 entstehende Abwärme zeitweise ausschließlich zur Innenraumbeheizung des Kraftfahrzeugs genutzt wird, d. h. wenn das heiße, aus dem Motorblock 4 austretende Kühlmittel nur in dem Heizkreislaufabschnitt 8 durch entsprechendes Schließen des ersten Drei-Wege-Ventils 7 und eines weiteren, in dem ersten, motorinternen Bypass 6 stromabwärts des ersten Drei-Wege-Ventils 7 und vor der Pumpe 5 angeordneten Absperrventils 17, zirkuliert wird, kann aufgrund des hohen Druckabfalls in dem Hochleistungs-Heizkörper und der Reduzierung des Kühlmittelvolumenstroms zu einer starken Erwärmung des Kühlmittels, z. B. bis zum Siedepunkt, kommen, was jedoch zu einer Beschädigung des Abgaskrümmers 11 oder auch anderer Komponenten, die von dem heißen Kühlmittel durchströmt werden, führen kann. Um dies zu vermeiden, wird bei Eintreten einer vorbestimmten Bedingung, z. B. bei Erreichen einer bestimmten Kühlmitteltemperatur, einer bestimmten Abgastemperatur, einer bestimmten Motorlast, etc., der Kühlmittelvolumenstrom entdrosselt. In der hier dargestellten Ausführungsform wird die Abgastemperatur detektiert. Bei Erreichen eines Grenzwerts wird dann das Absperrventil 17 gesteuert, um zu öffnen, so dass das Kühlmittel zusätzlich in dem zum Kühlmittelkühler 3 führenden Kreislauf zirkulieren kann, wozu darüber hinaus auch das erste Drei-Wege-Ventil 7 entsprechend geöffnet wird. Durch Entdrosselung des Kühlmittelvolumenstroms wird eine Temperatursenkung des Kühlmittels erzielt und Beschädigungen des Abgaskrümmers 11 oder anderer Komponenten können effektiv vermieden werden.

Fig. 2 zeigt eine Kreislaufanordnung 1 mit direkter Ladeluftkühlung gemäß einer weiteren Ausführungsform, die sich von der in Fig. 1 dargestellten Ausführungsform lediglich dadurch unterscheidet, dass das den Motorblock 4 und den Abgaskrümmer 11 durchströmende Kühlmittel am Abgaskrümmer 11 und nicht am Motorblock 4 abgegriffen wird.

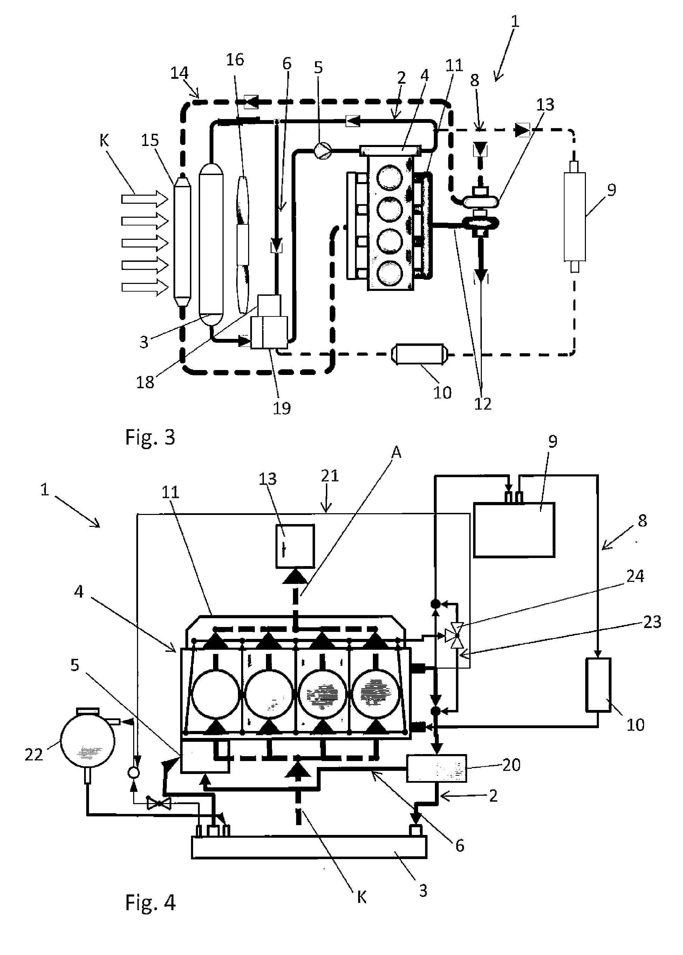

Fig. 3 zeigt eine Kreislaufanordnung 1 mit direkter Ladeluftkühlung gemäß einer weiteren Ausführungsform. Die hier dargestellte Ausführungsform unterscheidet sich von den in Fig. 1 und Fig. 2 dargestellten Ausführungsformen dadurch, dass anstelle des ersten Drei-Wege-Ventils 7 und des Absperrventils 17 hier als Schutzeinrichtung ein Drosselthermostat 18 und ein Kennfeldthermostat 19 in dem Kühlkreislaufabschnitt 2 angeordnet sind, die bei Erreichen einer vorbestimmten Temperatur des Kühlmittels, wenn die Abwärme des kühlmittelgekühlten Abgaskrümmers 11 zeitweise ausschließlich zur Innenraumbeheizung durch den Hochleistungs-Heizkörper bzw. Wärmetauscher 9 geleitet wird, die entsprechende Entdrosselung des Kühlmittelvolumenstroms bewirken.

Fig. 4 zeigt eine Kreislaufanordnung 1 gemäß einer noch einer weiteren Ausführungsform. Wie in der Figur angedeutet ist, handelt es sich hier um einen kühlmittelgekühlten, integrierten Abgaskrümmer 11. Ein Thermostat 20 ist in dem ersten, motorinternen Bypass 6 des Kühlkreislaufs 2 angeordnet. Die Pumpe 6 ist im Gegensatz zu den in Fig. 1 bis 3 dargestellten Ausführungsformen eine schaltbare Pumpe 5. Weiterhin dargestellt ist ein Entlüftungskreislaufabschnitt 21, der wie auch der Kühlmittelkühler 3 an einen Ausgleichsbehälter 22 angeschlossen ist. Darüber hinaus ist in der Figur die Strömung der Kühlluft K durch den Kühlmittelkühler 3 und den Motorblock 4 und das aus dem Abgaskrümmer 11 austretende Abgas A durch die gestrichelten Pfeile angedeutet.

Als Schutzeinrichtung dient in dieser Ausführungsform ein zweiter Bypass 23, der der in dem Heizkreislaufabschnitt 8 als zu dem Wärmetauscher 9 paralleler Zweig angeordnet ist. In dem zweiten Bypass 23 ist ein zweites Drei-Wege-Ventil 24 angeordnet. Bei Eintreten einer vorbestimmten Bedingung, wie bereits im Zusammenhang mit Figuren 1 bis 3 beschrieben, kann durch entsprechendes Öffnen des zweiten Drei-Wege-Ventils 24 der Kühlmittelvolumenstrom entdrosselt werden, indem ein zusätzlicher Strömungsweg für das Kühlmittel über den Kühlkreislaufabschnitt 2 freigegeben wird. Hierbei wird die schaltbare Pumpe 5 entsprechend betätigt, um das Kühlmittel in dem Kühlkreislaufabschnitt 2 zu zirkulieren.

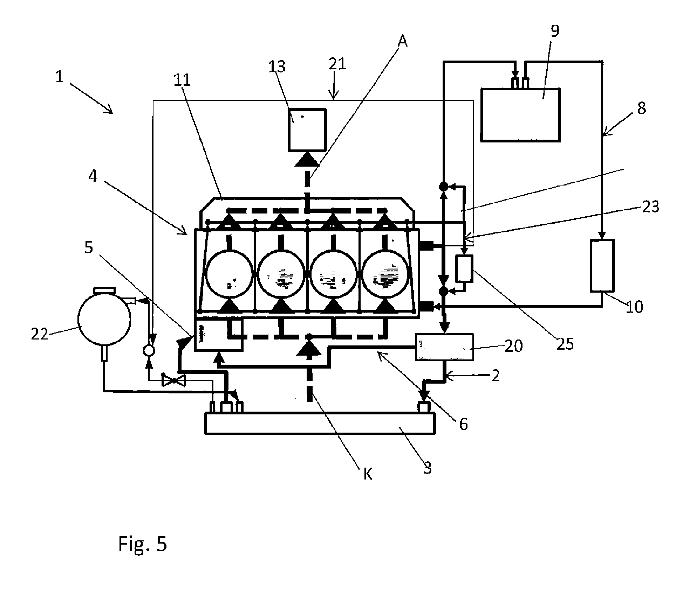

Schließlich zeigt Fig. 5 eine Kreislaufanordnung 1 gemäß einer noch einer weiteren Ausführungsform, die sich von der in Fig. 4 dargestellten Ausführungsform lediglich dadurch unterscheidet, dass anstelle des zweiten Drei-Wege-Ventils 24 ein Schlauchthermostat 25 zur Entdrosselung des Kühlmittelvolumenstroms bei Überschreiten einer vorbestimmten Temperatur des Kühlmittels vorgesehen ist, der den zweiten Bypass 23 öffnet und dadurch einen zusätzlichen Strömungsweg für das Kühlmittel, wie bereits im Zusammenhang mit Fig. 4 beschrieben, freigibt.

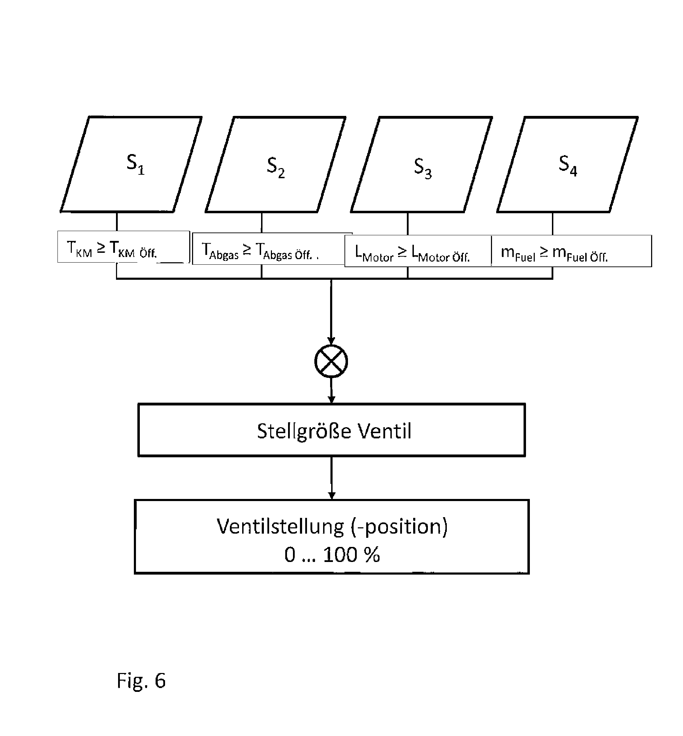

Fig. 6 zeigt ein Schema eines Betriebsverfahrens bei Erreichen der vorbestimmten Bedingung gemäß einer Ausführungsform. Ein Signal S₁, S₂, S₃ und/oder S₄ kennzeichnet das Erreichen der vorbestimmten Bedingung, wobei das Signal S₁ das Überschreiten der kritischen Kühlmitteltemperatur T_{KM Öff}. (oder alternativ der maximalen Kühlmitteltemperatur T_{KM max}), das Signal S₂ das Überschreiten der kritischen Abgastemperatur T_{Abgas Öff}. (oder alternativ der maximalen Abgastemperatur T_{Abgas max}), S₃ das Überschreiten der kritischen Motorlast L_{Motor Öff.} (oder alternativ das Überschreiten der maximalen Motorlast L_{Motor max}) und S₄ das Überschreiten der kritischen Einspritzmasse (oder alternativ das Überschreiten der maximalen Einspritzmasse m_{Fuel max}) indiziert. Wird das Erreichen bzw. Überschreiten der vorbestimmten Bedingung gemäß einem oder mehreren der Signale S₁ S₂, S₃, S₄ detektiert, wird beispielsweise das Ventil 24 (siehe Fig. 4) oder der Thermostat 25 (siehe Fig. 5) angesteuert, um zu öffnen.

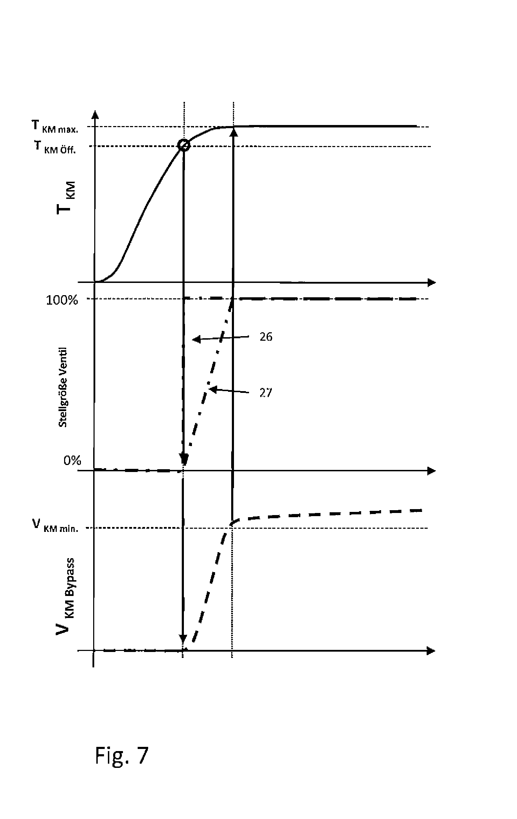

Fig. 7 zeigt drei untereinander angeordnete Diagramme zur Darstellung eines Betriebsverfahrens, wenn die Kühlmitteltemperatur T_{KM} die vorbestimmte Bedingung zum Öffnen beispielsweise des in Fig. 4 dargestellten Ventils 24 ist. Im obersten Diagramm wird ein Temperaturverlauf des Kühlmittels T_{KM} beginnend bei 0 °C bis zur maximalen Temperatur T_{KM max}. dargestellt, bei welcher das Kühlmittel im Abgaskrümmer 11 zu sieden beginnt. An einer kritischen Temperatur T_{KM Öff.}, welche kleiner ist als die maximale Temperatur T_{KM max} (Siedetemperatur des Kühlmittels) wird das Ventil 24 angesteuert, um zu öffnen, Im mittleren Diagramm ist die Stellgröße des Ventils für ein Ventil mit "Auf/Zu-Funktion" durch die Kurve 26 und für ein Ventil mit kontinuierlicher Verstellfunktion durch die Kurve 27 dargestellt. Es ist erkennbar, dass das Ventil mit "Auf/Zu-Funktion" bereits vor Erreichen der maximalen Temperatur T_{KM max.} vollständig geöffnet ist, wohingegen das Ventil mit kontinuierlicher Verstellfunktion erst an der maximalen Temperatur T_{KM max.} vollständig geöffnet ist. Entsprechend der Öffnung des Ventils steigt der Volumenstrom V_{KM Bypass} des Kühlmittels beispielsweise durch den zweiten Bypass 23 an, wie in der untersten Kurve dargestellt ist, wodurch der Kühlmittelstrom entdrosselt und eine entsprechende Temperaturerniedrigung erzielt wird.

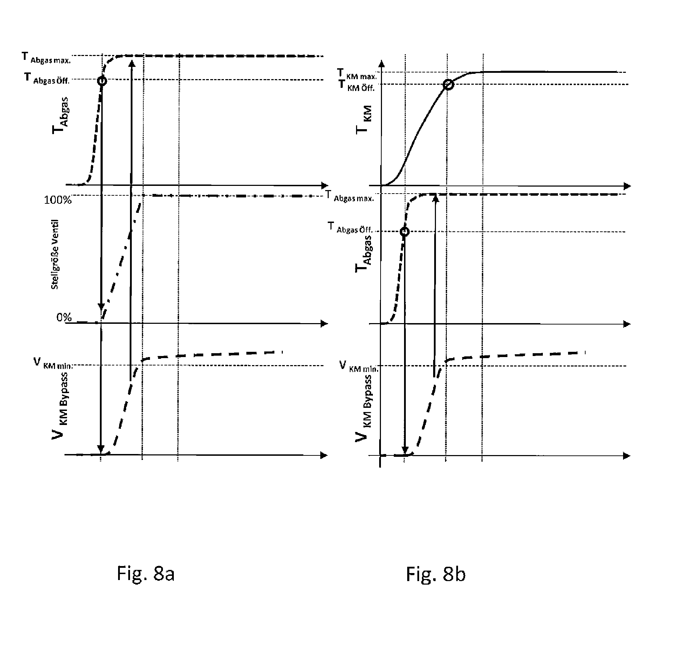

Fig. 8a zeigt drei untereinander angeordnete Diagramme zur Darstellung eines Betriebsverfahrens, wenn die Abgastemperatur T_{Abgas} die vorbestimmte Bedingung zum Öffnen und Schließen des Ventils 24 ist. Im obersten Diagramm wird ein Temperaturverlauf des Abgases TAbgas beginnend bei 0 °C bis zur maximalen Temperatur T_{Abgas max} dargestellt, wobei das Ventil 24 an der kritischen Temperatur T_{Abgas Öff}. angesteuert wird, um zu öffnen. In dem mittleren Diagramm ist die Stellgröße des Ventils 24, welches eine kontinuierliche Verstellfunktion aufweist, dargestellt. Bereits vor Erreichen der maximalen Temperatur T_{Abgas max.} wird das Ventil 24 angesteuert, um den Öffnungsgrad kontinuierlich zu vergrößern, bis ein Öffnungsgrad von 100 % erreicht wird. Entsprechend der Öffnung des Ventils 24 steigt der Volumenstrom V_{KMBypass} des Kühlmittels durch den zweiten Bypass 23 an, wie in der untersten Kurve dargestellt ist, wodurch der Kühlmittelstrom entdrosselt und eine entsprechende Temperaturerniedrigung erzielt wird.

In Fig. 8b ist die Änderung des in Fig. 8a dargestellten Volumenstroms V_{KM Bypass} entsprechend der ansteigenden Abgastemperatur T_{Abgas} nochmals dargestellt, wobei zum Vergleich der Temperaturverlauf der Kühlmitteltemperatur T_{KM} in dem obersten Diagramm dargestellt ist. Wie hier erkennbar ist, ist ein annähernd maximaler Volumenstrom V_{KM Bypass} bzw. der minimal erforderliche Volumenstrom V_{KM min.} des Kühlmittels über den zweiten Bypass 23 bereits vor Erreichen der Temperatur T_{KM Öff.} des Kühlmittels erreicht, welche zum Öffnen des Ventils 24 notwendig ist, wenn dieses auf der Basis der Kühlmitteltemperatur T_{KM} angesteuert wird, um zu öffnen (siehe Fig. 7).

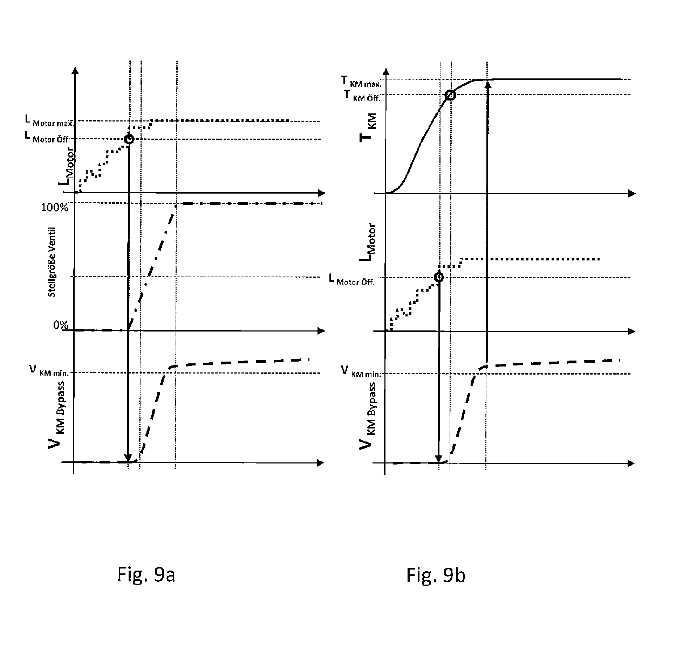

Fig. 9a zeigt drei untereinander angeordnete Diagramme zur Darstellung eines Betriebsverfahrens, wenn die Motorlast L_{Motor} die vorbestimmte Bedingung zum Öffnen und Schließen des Ventils 24 ist. Im obersten Diagramm wird ein Verlauf der Motorlast L_{Motor} beginnend bei 0 % bis zur maximalen Motorlast L_{Motor max} dargestellt. Darunter ist wiederum die Stellgröße des Ventils 24 mit kontinuierlicher Verstellfunktion dargestellt. Bereits vor Erreichen der maximalen Motorlast L_{Motor max}. wird bei der kritischen Motorlast L_{Motor Öff}. das Ventil 24 angesteuert, um den Öffnungsgrad kontinuierlich zu erhöhen, bis ein Öffnungsgrad von 100 % erreicht wird. Entsprechend der Öffnung des Ventils 24 steigt der Volumenstrom V_{KM Bypass} des Kühlmittels durch den zweiten Bypass 23 an, wie wiederum in der untersten Kurve dargestellt ist, wodurch der Kühlmittelstrom entdrosselt und eine entsprechende Temperaturerniedrigung erzielt wird.

In Fig. 9b ist die Änderung des in Fig. 9a dargestellten Volumenstroms V_{KM Bypass} entsprechend der ansteigenden Motorlast L_{Motor} nochmals dargestellt, wobei zum Vergleich der Temperaturverlauf der Kühlmitteltemperatur T_{KM} in dem obersten Diagramm dargestellt ist. Wie hier erkennbar ist, ist ein annähernd maximaler Volumenstrom V_{KM Bypass} bzw. der minimal erforderliche Volumenstrom V_{KM min} des Kühlmittels über den zweiten Bypass 23 auch hierbei bereits vor Erreichen der Temperatur des Kühlmittels erreicht, welche zum Öffnen des Ventils 24 notwendig ist, wenn dieses auf der Basis der Kühlmitteltemperatur T_{KM} angesteuert wird, um zu öffnen (siehe Fig. 7).

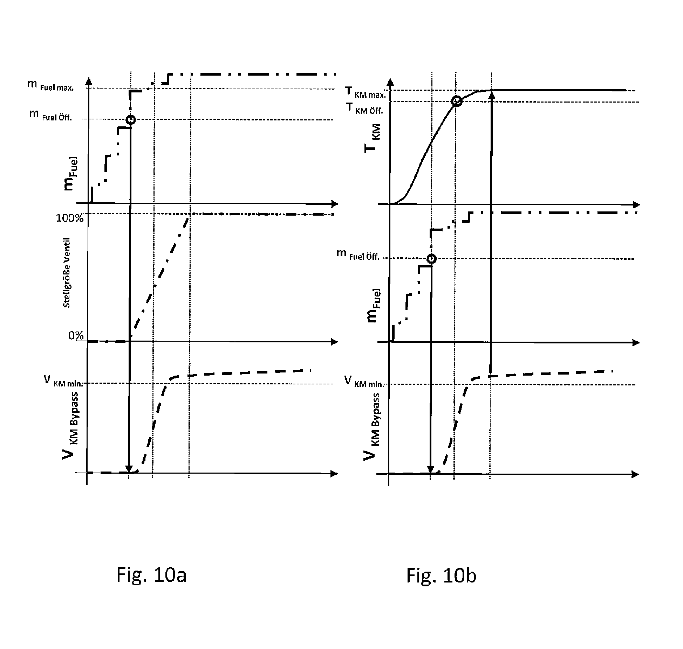

Fig. 10a zeigt drei untereinander angeordnete Diagramme zur Darstellung eines Betriebsverfahrens, wenn die Einspritzmasse m_{Fuel} die vorbestimmte Bedingung zum Öffnen und Schließen des Ventils 24 ist. Im obersten Diagramm wird ein Verlauf der Einspritzmasse m_{Fuel} beginnend bei 0 % bis zur maximalen Einspritzmasse m_{Fuel max.} dargestellt. Darunter ist wiederum die Stellgröße des Ventils für ein Ventil mit kontinuierlicher Verstellfunktion dargestellt. Bereits vor Erreichen der maximalen Einspritzmasse m_{Fuel max.} wird bei einer kritischen Einspritzmasse m_{Fuel Öff}. das Ventil 24 angesteuert, um den Öffnungsgrad kontinuierlich zu erhöhen, bis ein Öffnungsgrad von 100 % erreicht wird. Entsprechend der Öffnung des Ventils 24 steigt der Volumenstrom V_{KM Bypass} des Kühlmittels beispielsweise durch den zweiten Bypass 23 an, wie auch hier entsprechend in der untersten Kurve dargestellt ist, wodurch der Kühlmittelstrom entdrosselt und eine entsprechende Temperaturerniedrigung erzielt wird.

In Fig. 10b ist die Änderung des in Fig. 10a dargestellten Volumenstroms V_{KM Bypass} entsprechend der ansteigenden Einspritzmasse m_{Fuel} nochmals dargestellt, wobei zum Vergleich der Temperaturverlauf der Kühlmitteltemperatur T_{KM} in dem obersten Diagramm dargestellt ist, Wie hier erkennbar ist, ist ein annähernd maximaler Volumenstrom V_{KM Bypass} bzw. der minimal erforderliche Volumenstrom V_{KM min.} des Kühlmittels über den zweiten Bypass 23 auch hierbei bereits vor Erreichen der Temperatur des Kühlmittels erreicht, welche zum Öffnen des Ventils 24 notwendig ist, wenn dieses auf der Basis der Kühlmitteltemperatur T_{KM} angesteuert wird, um zu öffnen (siehe Fig. 7).

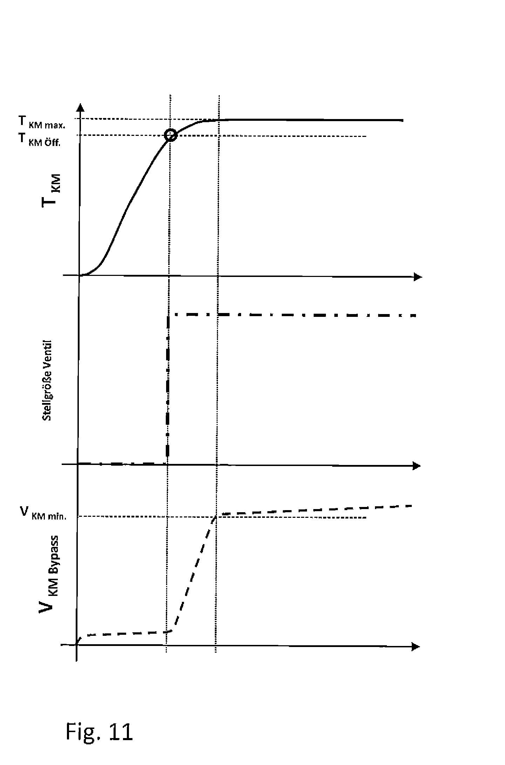

Fig. 11 zeigt drei untereinander angeordnete Diagramme zur Darstellung eines Betriebsverfahrens, wenn die Kühlmitteltemperatur T_{KM} die vorbestimmte Bedingung zum Steuern des Schlauchthermostats 25 ist. Im obersten Diagramm wird - wie auch in Fig. 7 entsprechend für das Ventil 24 - ein Temperaturverlauf des Kühlmittels T_{KM} beginnend bei 0 °C bis zur maximalen Temperatur T_{KM max}. dargestellt. An einer Temperatur T_{KM Öff}., welche kleiner ist als die maximale Temperatur T_{KM max.} öffnet der Schlauchthermostat 25, wie im mittleren Diagramm erkennbar ist. Entsprechend der Öffnung des Ventils 2 steigt der Volumenstrom V_{KM Bypass} des Kühlmittels durch den zweiten Bypass 23 an, wie in der untersten Kurve dargestellt ist, wodurch der Kühlmittelstrom entdrosselt und eine entsprechende Temperaturerniedrigung erzielt wird.

Insgesamt betrachtet wird durch die oben beschriebene Kreislaufanordnung 1 eine komfortable Innenraumklimatisierung bzw. innenraumbeheizung bei gleichzeitig reduziertem Kraftstoffverbrauch auf effiziente Weise erzielt.

### Bezugszeichenliste

- 1: Kreislaufanordnung
- 2: Kühlkreislaufabschnitt
- 3: Kühlmittelkühler
- 4: Motorblock
- 5: Pumpe
- 6: erster, motorinterner Bypass
- 7: erstes Drei-Wege-Ventil
- 8: Heizkreislaufabschnitt
- 9: Wärmetauscher
- 10: Motorölkühler
- 11: Abgaskrümmer
- 12: Abgas
- 13: Abgasturbolader
- 14: Ladeluftkreislaufabschnitt
- 15: Ladeluftkühler
- 16: Lüfter
- 17: Absperrventil
- 18: Drosselthermostat
- 19: Kennfeldthermostat
- 20: Thermostat
- 21: Entlüftungskreislaufabschnitt
- 22: Ausgleichsbehälter
- 23: zweiter Bypass
- 24: zweites Drei-Wege-Ventil
- 25: Schlauchthermostat
- 26: Ventil mit. "Auf/ Zu" Funktion
- 27: Ventil mit kontinuierlicher Verstellfunktion

- K: Kühlluft
- A: Abgas

## Patentansprüche

1. Kreislaufanordnung (1) für ein eine Brennkraftmaschine aufweisendes Kraftfahrzeug, wobei ein Kühlmittelvolumenstrom in einem zumindest einen Kühlmittelkühler (3), einen Motorblock (4) und einen Abgaskrümmer (11) durchlaufenden Kühlkreislaufabschnitt (2) und in einem zumindest einen Wärmetauscher (9), den Motorblock (4) und den Abgaskrümmer (11) durchlaufenden Heizkreislaufabschnitt (8) zirkulierbar ist, wobei
in der Kreislaufanordnung (1) eine Schutzeinrichtung zur Entdrosselung des den Abgaskrümmer (11) durchlaufenden Kühlmittelvolumenstroms vorgesehen ist, **dadurch gekennzeichnet, dass** die Schutzeinrichtung ein zweiter Bypass (23) ist, der in dem Heizkreislaufabschnitt (8) als zu dem Wärmetauscher (9) paralleler Zweig angeordnet ist und in dem zweiten Bypass (23) ein zweites Drei-Wege-Ventil(24), ein Absperrventil und/oder ein Schlauchthermostat (25) vorgesehen ist, wobei eine Sensierung einer Öffnungstemperatur des Schlauchthermostats (25) über eine Wadhspille erfolgt und durch einen definierten Leckage-Volumenstrom des Kühlmittels realisiert wird.

2. Kreislaufanordnung (1) nach Anspruch 1, **dadurch gekennzeichnet, dass**
die Schutzeinrichtung zusätzlich ein Ventil (7, 17, 24) oder ein Thermostat (18, 19) ist, das/der in einem ersten, motorinternen Bypass (6) angeordnet ist.

3. Kreislaufanordnung (1) nach einem oder mehreren der Ansprüche 1 bis 2, **dadurch gekennzeichnet, dass** der Wärmetauscher (9) eine Heizeinrichtung zum Beheizen des Innenraums des Kraftfahrzeugs, insbesondere ein Hochleistungs-Heizkörper mit reduziertem Volumenstrom von 100 bis 400 l/h ist.

4. Kreislaufanordnung (1) nach einem oder mehreren der Ansprüche 1 bis 3, **dadurch gekennzeichnet, dass** der Abgaskrümmer (11) ein kühlmittelgekühlter Abgaskrümmer (11) und/oder ein integrierter Abgaskrümmer (11), insbesondere ein in einen Zylinderkopf des Motorblocks integrierter Abgaskrümmer (11), ist.

5. Kreislaufanordnung (1) nach einem oder mehreren der Ansprüche 1 bis 4, **dadurch gekennzeichnet, dass** der zweite Bypass (23) in den Kühlkreislaufabschnitt (2) mündet.

6. Kreislaufanordnung (1) nach einem oder mehreren der Ansprüche 1 bis 5, **dadurch gekennzeichnet, dass** der zweite Bypass (23) beim Auftreten einer vorbestimmten Bedingung geöffnet wird.

7. Kreislaufanordnung (1) nach einem oder mehreren der Ansprüche 2 bis 6, **dadurch gekennzeichnet, dass** das Ventil (17) oder der Thermostat (18, 19), das/der in dem ersten, motorinternen Bypass (2) angeordnet ist, beim Auftreten einer vorbestimmten Bedingung geöffnet wird.

8. Kreislaufanordnung (1) nach Anspruch 6 oder 7 , **dadurch gekennzeichnet, dass** die vorbestimmte Bedingung eines oder mehrere von einer vorbestimmten Kühlmitteltemperatur (T_{KM}), insbesondere einer Kühlmitteltemperatur (T_{KM}) in einem Bereich zwischen 80 °C und 110 °C, einer vorbestimmten Abgastemperatur (T_{Abgas}), insbesondere einer Abgastemperatur (T_{Abgas}), welche oberhalb 120 °C liegt, einer vorbestimmten Motorlast(L_{Motor}), insbesondere einer Motorlast (L_{Motor}), welche in einem Bereich von 35 % bis 70 % liegt, und/oder einer vorbestimmten Einspritzmasse(m_{Fuel}), insbesondere einer Einspritzmasse (m_{Fuel}), welche in einem Bereich von 35 % bis 70 % liegt, ist.

## Claims

1. A circuit arrangement (1) for a motor vehicle having an internal combustion engine, wherein a coolant volume flow can be circulated in a cooling circuit portion (2) passing through at least one coolant cooler (3), an engine block (4) and an exhaust gas manifold (11) and in a heating circuit portion (8) passing through at least one heat exchanger (9), the engine block (4) and the exhaust gas manifold (11), wherein a protection device for dethrottling the coolant volume flow passing through the exhaust gas manifold (11) is provided in the circuit arrangement (1), **characterised in that** the protection device is a second bypass (23), which is arranged in the heating circuit portion (8) as a branch parallel to the heat exchanger (9), and a three-way valve (24), a shut-off valve and/or a hose thermostat (25) is provided in the second bypass (23), wherein an opening temperature of the hose thermostat (25) is sensed via a wax pill and this procedure is performed through a defined leakage volume flow of the coolant.

2. The circuit arrangement (1) according to claim 1, **characterised in that** the protection device is additionally a valve (7, 17, 24) or a thermostat (18, 19), which is arranged in a first, engine-internal bypass (6).

3. The circuit arrangement (1) according to one or more of claims 1 to 2, **characterised in that** the heat exchanger (9) is a heating device for heating the interior of the motor vehicle, in particular a highpower heating unit with reduced volume flow of 100 to 400 l/h.

4. The circuit arrangement (1) according to one or more of claims 1 to 3, **characterised in that** the exhaust gas manifold (11) is a coolant-cooled exhaust gas manifold (11) and/or an integrated exhaust gas manifold (11), in particular an exhaust gas manifold (11) integrated into a cylinder head of the engine block.

5. The circuit arrangement (1) according to one or more of claims 1 to 4, **characterised in that** the second bypass (23) opens out into the cooling circuit portion (2).

6. The circuit arrangement (1) according to one or more of claims 1 to 5, **characterised in that** the second bypass (23) is opened in the event of a predetermined condition.

7. The circuit arrangement (1) according to one or more of claims 2 to 6, **characterised in that** the valve (17) or the thermostat (18, 19), which is arranged in the first, engine-internal bypass (2), is opened in the event of a predetermined condition.

8. The circuit arrangement (1) according to claim 6 or 7, **characterised in that** the predetermined condition is one or more of a predetermined coolant temperature (Tₖₘ), in particular a coolant temperature (Tₖₘ) in a range between 80 °C and 110 °C, a predetermined exhaust gas temperature (T_{Abgas}), in particular an exhaust gas temperature (T_{Abgas}) above 120 °C, a predetermined engine load (L_{Motor}), in particular an engine load (L_{Motor}) in a range from 35 % to 70 %, and/or a predetermined injection mass (m_{Fuel}), in particular an injection mass (m_{Fuel}) in a range from 35 % to 70 %.

## Revendications

1. Agencement de circuits (1) pour un véhicule automobile présentant un moteur à combustion interne, où un débit volumique de liquide de refroidissement peut circuler dans une partie de circuit de refroidissement (2) traversant au moins un radiateur à liquide de refroidissement (3), un bloc-moteur (4) et un collecteur de gaz d'échappement (11), et pouvant circuler dans une partie de circuit de chauffage (8) traversant au moins un échangeur de chaleur (9), le bloc-moteur (4) et le collecteur de gaz d'échappement (11), où il est prévu, dans l'agencement de circuits (1), un dispositif de protection servant au désétranglement du débit volumique de liquide de refroidissement traversant le collecteur de gaz d'échappement (11), **caractérisé en ce que** le dispositif de protection est une deuxième dérivation (23) qui est disposée dans la partie de circuit de chauffage (8) comme un circuit secondaire parallèle à l'échangeur de chaleur (9), et il est prévu, dans la deuxième dérivation (23), une deuxième soupape à trois voies (24), une soupape de coupure et/ou un thermostat de flexible (25), où une détection d'une température d'ouverture du thermostat de flexible (25) se produit en passant par une pastille de paraffine et est réalisée par un débit volumique de fuite - défini - du liquide de refroidissement.

2. Agencement de circuits (1) selon la revendication 1, **caractérisé en ce que** le dispositif de protection est en outre une soupape (7, 17, 24) ou bien un thermostat (18, 19) qui est disposé(e) dans une première dérivation (6) située à l'intérieur du moteur.

3. Agencement de circuits (1) selon l'une quelconque ou plusieurs des revendications 1 et 2, **caractérisé en ce que** l'échangeur de chaleur (9) est un dispositif de chauffage servant au chauffage de l'habitacle du véhicule automobile, en particulier un radiateur à haut rendement ayant un débit volumique réduit compris entre 100 l/h et 400 l/h.

4. Agencement de circuits (1) selon l'une quelconque ou plusieurs des revendications 1 à 3, **caractérisé en ce que** le collecteur de gaz d'échappement (11) est un collecteur de gaz d'échappement (11) refroidi par le liquide de refroidissement et/ou un collecteur de gaz d'échappement intégré (11), en particulier un collecteur de gaz d'échappement (11) intégré dans une culasse du bloc-moteur.

5. Agencement de circuits (1) selon l'une quelconque ou plusieurs des revendications 1 à 4, **caractérisé en ce que** la deuxième dérivation (23) débouche dans la partie de circuit de refroidissement (2).

6. Agencement de circuits (1) selon l'une quelconque ou plusieurs des revendications 1 à 5, **caractérisé en ce que** la deuxième dérivation (23) est ouverte lorsqu'il se produit une condition prédéfinie.

7. Agencement de circuits (1) selon l'une quelconque ou plusieurs des revendications 2 à 6, **caractérisé en ce que** la soupape (17) ou le thermostat (18, 19), qui est disposé(e) dans la première dérivation (2) située à l'intérieur du moteur, est ouvert(e) lorsqu'il se produit une condition prédéfinie.

8. Agencement de circuits (1) selon la revendication 6 ou 7, **caractérisé en ce que** la condition prédéfinie est l'une ou plusieurs de celles concernant une température de liquide de refroidissement prédéfinie (T_{KM}), en particulier une température de liquide de refroidissement (T_{KM}) se situant dans une plage comprise entre 80°C et 110°C, une température de gaz d'échappement prédéfïnie (T_{gaz d'échappement}), en particulier une température de gaz d'échappement (T_{gaz d'échappement}) qui est supérieure à 120 °C, une charge du moteur prédéfinie (Lₘₒₜₑᵤᵣ), en particulier une charge du moteur (Lₘₒₜₑᵤᵣ) qui se situe dans une plage comprise entre 35 % et 70 %, et/ou une masse injectée prédéfinie (m_{carburant}), en particulier une masse injectée (m_{carburant}) qui se situe dans une plage comprise entre 35 % et 70 %.
